# DEMANDE DE BREVET EUROPEEN

(11) **EP 3 719 337 A1**
(43) Date de publication de la demande: **07.10.2020**
(21) Numéro de dépôt: 20169006.2
(22) Date de dépôt: 09.04.2020
(51) Int. Cl.: F16D 13/58

(54) **ENSEMBLE DE TRANSMISSION DE COUPLE POUR UN VEHICULE AUTOMOBILE**

(30) Priorité: 04.04.2019 FR 1903632
(71) Demandeur: VALEO EMBRAYAGES, 80009 Amiens (FR)
(72) Inventeur: JAFFRES, Aurélien, 95892 CERGY PONTOISE (FR); ARHAB, Rabah, 95892 CERGY PONTOISE (FR)
(74) Mandataire: Vincent, Catherine Marie Marguerite

(57) **Abrégé**

L'invention concerne un module de transmission de couple (100) pour ensemble de transmission de couple (900), comprenant :
- au moins un embrayage humide (1)
- au moins un dispositif d'actionnement (3) dudit au moins un embrayage humide
- un carter (2) agencé pour loger l'au moins un embrayage humide et le dispositif d'actionnement (3) associé.

## Description

L'invention concerne un ensemble de transmission de couple pour un véhicule automobile destiné à être installé dans une chaine de transmission entre un groupe propulseur et une boîte de vitesse. L'invention concerne en particulier le domaine des véhicules automobiles de type poids lourds.

Dans l'état de la technique, il est connu des véhicules automobiles comprenant un dispositif de transmission de couple disposé entre un moteur à combustion interne et une boîte de vitesses. Un tel dispositif de transmission de couple comporte un élément d'entrée de couple accouplé au vilebrequin du moteur à combustion interne et un élément de sortie de couple accouplé à la boîte de vitesses, l'élément d'entrée de couple et l'élément de sortie de couple étant mobiles en rotation relative autour d'un axe de rotation.
Des embrayages humides, simple ou double, pour véhicules poids lourds sont connus, en particulier de EP2868942 A1. Ce document divulgue un système d'embrayage logé dans un carter d'embrayage ouvert qui coopère avec un carter de boite. Il existe un besoin pour limiter l'encombrement, en particulier l'encombrement axial, de l'embrayage.
Il existe également un besoin pour faciliter le montage du module d'embrayage dans la chaine de transmission.
Il existe un besoin d'une solution adaptée aux conditions des véhicules poids lourds, transport en commun, en particulier dans des conditions particulièrement sévères du type engins de chantier, transport spéciaux. Il existe notamment un besoin pour améliorer les performances thermiques pour le applications poids lourds.
Il existe un besoin de diminuer la consommation de carburant en améliorant les performances d'amortissement lors de la descente et montée en couple.
L'invention vise à répondre, au moins en partie à ces besoins.

A cet effet, l'invention concerne un ensemble de transmission de couple comprenant :
- au moins un embrayage humide
- au moins un dispositif d'actionnement dudit au moins un embrayage humide
- un carter agencé pour loger l'au moins un embrayage humide et le dispositif d'actionnement associé.
L'au moins un embrayage humide comporte un premier porte disque, en particulier un porte disque interne et un second porte disque, en particulier porte disque externe. Il peut être un embrayage multi-disques ou dans une variante un embrayage humide à plateau unique (« *Single-plate Wet Clutch* » en anglais).

L'au moins un embrayage, le dispositif d'actionnement associé et le carter peuvent être pré assemblés en un module de transmission de couple. Ceci a notamment pour avantage de faciliter le montage dans la chaine de transmission.
Avantageusement, l'ensemble de transmission de couple et le module peuvent présenter l'une ou plusieurs des caractéristiques suivantes :
- le carter comporte une première ouverture agencée pour être traversée par un élément de sortie de couple. La première ouverture présente de façon préférentielle une surface de guidage agencée pour coopérer avec l'élément de sortie de couple.
- le carter comporte une seconde ouverture traversée par un élément d'entrée de couple relié à l'au moins un embrayage humide, notamment au second porte disque de l'embrayage humide. L'ouverture présente de façon préférentielle une surface de guidage agencée pour coopérer avec l'élément d'entrée de couple.
- le carter comporte une première partie, par exemple destinée à être située du côté boîte, pour loger l'au moins un embrayage, et une seconde partie, aussi appelée couvercle, par exemple destinée à être située du côté moteur. Les deux parties peuvent par exemple être assemblées par rivetage, vissage, soudure, collage ou tout moyen approprié connu de l'homme du métier.
- le dispositif d'actionnement est logé dans la seconde partie du carter.
- le carter comporte au moins un premier canal configuré pour projeter un fluide de refroidissement, notamment de l'huile, directement vers le porte disque interne de l'embrayage humide. Le premier canal est avantageusement situé, au moins pour sa plus grande partie, dans la première partie du carter.
- le carter comporte en outre au moins un deuxième canal configuré pour alimenter en fluide, notamment de l'huile, un organe d'activation du dispositif d'actionnement de l'embrayage humide
- le dispositif d'actionnement comporte de préférence un diaphragme. Dans une variante l'embrayage peut être actionné par un récepteur hydraulique (ou piston).
- l'embrayage humide est normalement fermé. Un embrayage est dit normalement fermé s'il est en position embrayée lorsqu'il n'est pas actionné. Dans une variante l'embrayage humide est normalement ouvert.
- l'élément d'entrée de couple est sous forme d'un arbre intermédiaire.
- le premier porte disque est supporté par l'élément de sortie de couple.
- le porte disque externe de l'embrayage humide comporte un déflecteur pour faciliter la circulation de fluide de refroidissement et le forcer à passer à travers les disques de l'embrayage.

Dans une variante particulière l'ensemble de transmission de couple comporte en outre au moins un parmi l'organe d'activation du dispositif d'actionnement, un amortisseur de torsion, une unité hydraulique et un système de pilotage.
Dans une autre variante particulière l'ensemble de transmission de couple comporte en outre un moteur électrique du groupe propulseur.

Dans une variante, le module, respectivement l'ensemble, comporte un unique embrayage. Dans une autre variante, le module, respectivement l'ensemble, comporte plusieurs embrayages, notamment deux embrayages. Les embrayages peuvent être adjacents radialement ou axialement selon différents modes de réalisation.
Selon encore un autre de ses aspects l'invention a pour objet un procédé de montage d'un ensemble de transmission de couple tel que décrit précédemment.
Le procédé comprend une étape d'installation du module dans un logement d'une boîte de vitesse.
Dans la présente description, il est fait référence à un premier et à un second porte disque, à une première ouverture et à une seconde ouverture, à une première partie et à et une seconde partie, un premier canal et à un deuxième canal. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre temporel par exemple pour apprécier la disposition des différents éléments, leur fonctionnement, ou encore leur réalisation.

D'autres avantages et caractéristiques de la présente invention apparaîtront plus clairement à la lecture de la description suivante, fournie à titre illustratif et non limitatif, et des dessins annexés dans lesquels :
La figure 1 est une vue éclatée en perspective d'un module de transmission de couple selon une forme de réalisation de l'invention,
la figure 2 est une vue en perspective du module de transmission de couple de la figure 1 une fois assemblé,
les figures 3A et 3B sont des vues schématiques en coupe d'un ensemble de transmission de couple selon l'invention avant et après assemblage dans la chaîne de transmission,
la figure 4 est une vue schématique fonctionnel d'un ensemble de transmission selon l'invention, et
les figures 5A et 5B sont des vues schématiques partielles en coupe d'un ensemble de transmission de couple selon l'invention.

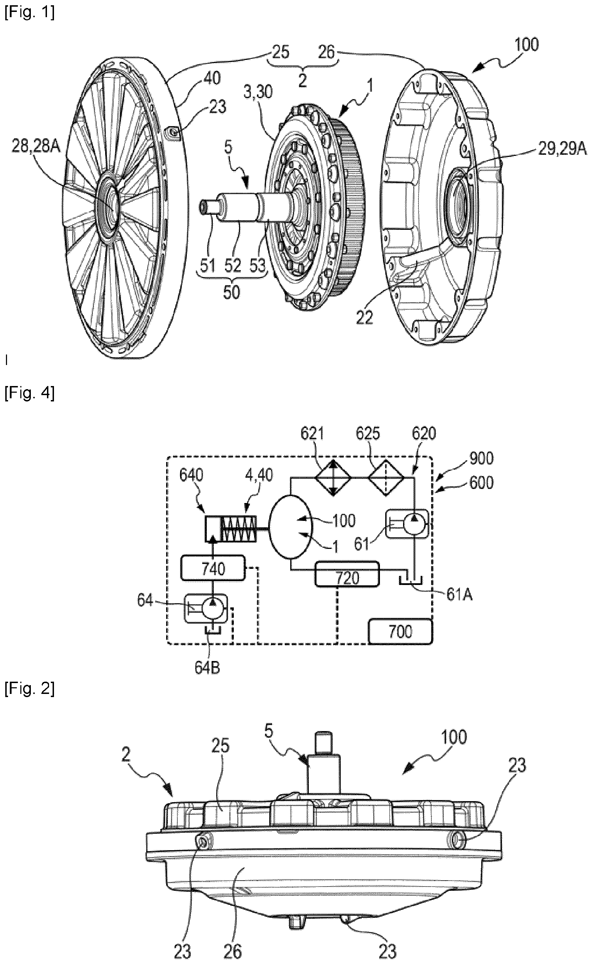

La figure 1 représente un ensemble de transmission de couple 900 destiné à être intégré à une chaîne de transmission entre un groupe propulseur 105 et une boîte de vitesses 106. L'ensemble 900 comportant au moins un embrayage humide 1 et au moins un dispositif d'actionnement 3 de l'embrayage humide. L'embrayage 1 et le dispositif d'actionnement 3 associé sont logés dans un carter 2. L'embrayage 1 et le carter forment en partie un module de transmission 100 illustré ici avant assemblage. Le module de transmission 100 est illustré assemblé figure 2.
Selon le mode de réalisation l'ensemble 900, respectivement le module 100, peut comporter un unique embrayage humide. Dans une variante l'ensemble de transmission, respectivement le module, comporte au moins deux embrayages humides, en particulier deux embrayages humides disposés radialement l'un par rapport à l'autre.
De façon avantageuse le carter 2 comporte une première partie 26 et une seconde partie 25. Les deux parties 25 et 26, représentées assemblées sur la Figure 2 peuvent par exemple être assemblées par rivetage, vissage, soudure, collage ou tout moyen approprié connu de l'homme du métier.
La première partie 26 du carter 2, située du côté de la boîte de vitesse, est notamment configurée pour loger l'au moins un embrayage 1. Cette première partie 26 comporte une première ouverture 29 configurée pour être traversée par un élément de sortie de couple 6. L'ouverture 29 présente de façon préférentielle une surface de guidage 29A agencée pour coopérer avec l'élément de sortie de couple 6.
La seconde partie 25 du carter 2, située du côté du groupe propulseur, comporte une seconde ouverture 28 traversée par un élément d'entrée de couple 5. L'ouverture 28 présente de façon préférentielle une surface de guidage 28A agencée pour coopérer avec l'élément d'entrée de couple 5.
L'élément d'entrée de couple 5 est sous forme d'un arbre intermédiaire 50. Comme illustré, l'arbre 50 peut comporter plusieurs portions, notamment cylindriques ou tubulaires. Une première portion d'extrémité 51, notamment cylindrique, est agencée pour être reliée au vilebrequin. Une seconde portion 52, adjacente à la première, est par exemple agencée pour supporter un amortisseur de torsion 7. Une troisième portion 53 est reliée à l'embrayage 1. La première portion 51 présente par exemple un premier diamètre extérieur. La seconde portion présente un second diamètre extérieur, le premier diamètre étant par exemple inférieur au second diamètre. La troisième portion 53 présente un troisième diamètre extérieur, le troisième diamètre étant ici égal au second diamètre. Dans une variante non représentée, le troisième diamètre est supérieur ici égal au second diamètre.

Dans l'exemple illustré le dispositif d'actionnement 3 est logé dans la seconde partie 25 du carter. Il est ici sous la forme d'un diaphragme 30. Dans une variante non représentée le dispositif d'actionnement est sous la forme d'un piston 35.
L'embrayage 1 et le carter forment en partie un module de transmission 100 illustré assemblé figure 2. Le dispositif d'actionnement 3 et l'élément d'entrée de couple 5 appartiennent également au module 100 illustré.

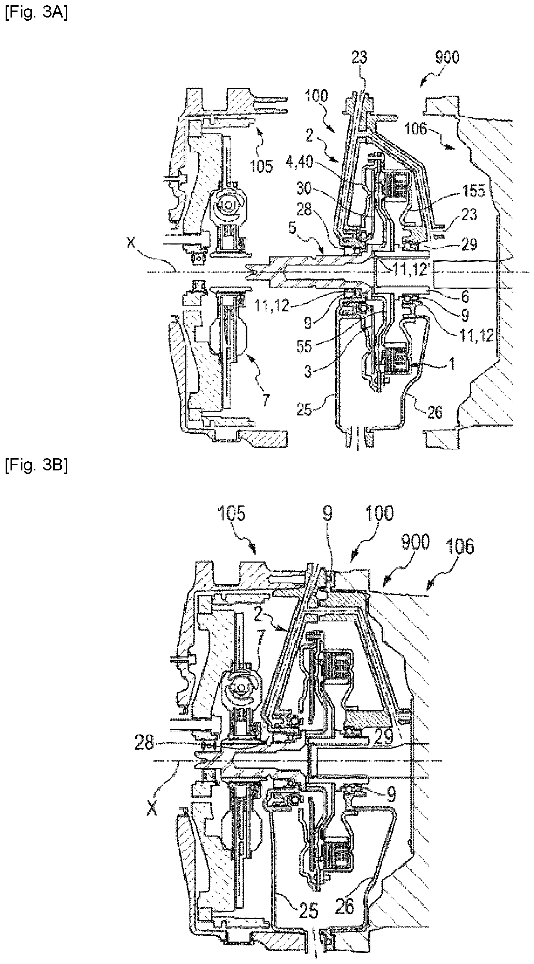

Les figures 3A et 3B illustrent un ensemble de transmission 900 avant et après assemblage entre un groupe propulseur 105 et une boîte de vitesses 106.
L'embrayage humide 1 est ici multidisques et comporte un premier porte disques 16 et un second porte disques 15. Le premier porte disque 16 est solidaire en rotation de l'élément de sortie de couple 6. Il peut être fixé à l'élément de sortie de couple 6 par tout moyen approprié connu de l'homme du métier. Le premier porte disque 16 est monté rotatif par rapport au carter 2 par l'intermédiaire d'un premier palier 11, notamment un palier à roulement 12.
Dans une variante non illustrée le premier porte disque 16 est réalisé en une seule pièce avec l'élément de sortie de couple 6.
Le second porte disques 15 est monté rotatif sur l'élément d'entrée de couple 5, notamment sur la troisième portion 53 par l'intermédiaire d'un deuxième palier 11, notamment un palier à roulement 12. L'élément d'entrée de couple 5 est relié à l'au moins un embrayage humide 1, notamment au second porte disque 15 de l'embrayage humide via un élément de liaison 55 situé entre la portion 53 et le second porte disque 15. L'élément de liaison 55 est fixé au second porte disque 15 par rivetage comme illustré ou par vissage, soudure, collage ou tout moyen approprié connu de l'homme du métier.
Un troisième palier 11, en particulier un palier axial 12', est disposé entre l'élément d'entrée 5 et l'élément de sortie 6.

Comme illustré en particulier sur la Figure 3B, lorsque le carter 2 est assemblé, l'élément d'entrée de couple 5 traverse la seconde ouverture 28. Un premier moyen d'étanchéité 9 est disposé entre l'élément d'entrée 5 et la seconde partie 25 du carter 2 dans laquelle est située la seconde ouverture 28. Un deuxième moyen d'étanchéité 9 est disposé entre l'élément de sortie 6 et la première partie 26 du carter 2. Les premier et deuxième moyens d'étanchéité 9 sont ici des joints d'étanchéités dynamiques, par exemple de types à lèvres.
Un troisième moyen d'étanchéité 9 est disposé entre les première et seconde parties 26 et 25 du carter 2. Ce troisième moyen d'étanchéité est en particulier un moyen d'étanchéité statique, ici par exemple un joint torique.

De manière préférentielle la première ouverture 29 et/ou la seconde ouverture 28 présente une surface interne 29A, respectivement 28A, agencée pour coopérer avec les palier 11 et joint d'étanchéité 9 associés respectivement à l'élément de sortie de couple 6 et à l'élément d'entrée de couple 5.

Les figure 3A et figure 3B illustrent ainsi un procédé de montage d'un ensemble de transmission de couple selon l'invention. Le module 100 assemblé est installé dans un logement de la boîte de vitesse 106. Ce procédé est particulièrement avantageux et simplifie les opérations de montage.

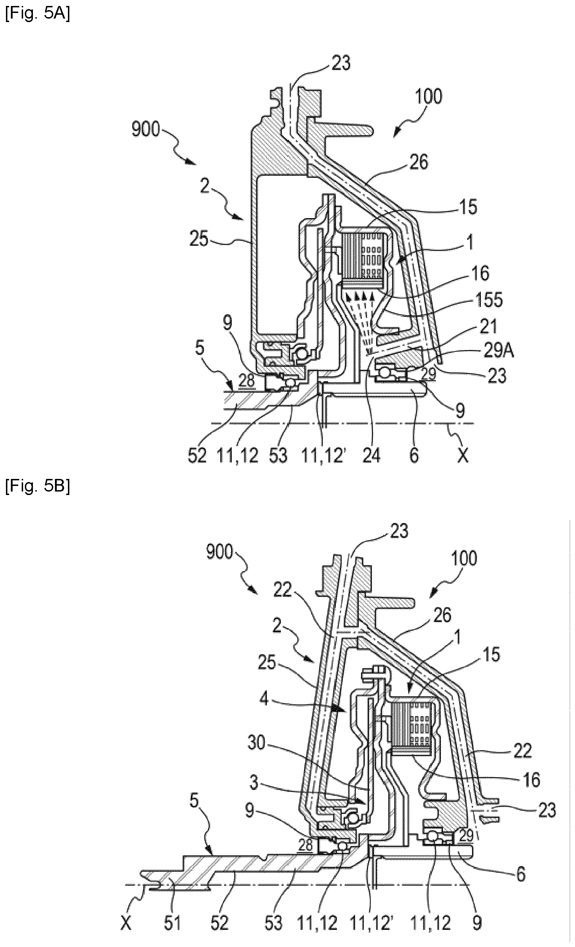

L'ensemble de transmission 900 illustré à la Figure 4 comporte un module d'embrayage 100 tel que décrit précédemment. L'organe d'activation 4 est ici sous forme de CSC 40. L'ensemble 900 comporte une unité hydraulique 600.
L'unité hydraulique 600 comporte un circuit de refroidissement 620.
Comme illustré sur la Figure 4, le circuit de refroidissement 620 peut comporter un filtre 625 et un échangeur de chaleur 621.
L'unité hydraulique 600 comporte également un circuit d'actionnement 640.
L'unité hydraulique 600 comporte une première pompe 61 reliée à un premier réservoir d'huile 61A pour le refroidissement du module d'embrayage 100. Elle comporte une deuxième pompe 64 reliée à un deuxième réservoir d'huile 64A pour la commande de l'organe d'activation 4. La première pompe 61 est en particulier une pompe basse pression, la pression étant par exemple inférieure à 5 bar, voire inférieure à 3 bar, notamment comprise entre 0 et 2 bar. La deuxième pompe 64 est en particulier une pompe haute pression apte à délivrer une pression au moins égale à 10 bar, voire supérieure ou égale à 15 bar, notamment supérieure à 20 bar. La pression de commande est par exemple comprise entre 0 et 40 bar, notamment entre 0 et 20 bar, voire entre 0 et 10 bar. La pression de commande peut en particulier être égale à 10 bar.
L'ensemble de transmission 900 comporte un système de pilotage 700 configuré pour assurer les fonctions de contrôle 720 du circuit de refroidissement 620 et les fonctions de contrôle 740 du circuit de commande 640 de l'embrayage 1.
La Figure 2 illustre le couvercle 25 et un logement 26 du module d'embrayage 100.. Le module comporte des orifices 23 de connexion avec l'unité hydraulique 600, en partie extérieure au module d'embrayage 100. Ces orifices, ici au nombre de trois, sont agencés pour être reliés au un circuit de commande hydraulique 640, et au circuit de refroidissement 620 pour application d'une pression de refroidissement, respectivement d'une succion de refroidissement/ actionnement (pression négative). Dans l'exemple illustré deux des orifices 23 de connexion sont situés sur le couvercle 25. Ils servent à alimenter le module 100 respectivement via le premier canal 21 en fluide de refroidissement et via le deuxième canal 22 en fluide pour activer l'organe d'activation 4.
Dans l'exemple illustré Figure 5A et Figure 5B le premier porte disques 16 est ici un porte disques interne et le second porte disques 15 est un porte disques externe. Le carter 2 comporte un premier canal 21 configuré pour projeter un fluide de refroidissement directement vers le porte disque interne 16. Le premier canal 21 est avantageusement situé, au moins pour sa plus grande partie, dans la première partie 26 du carter 2. Le canal 21 communique avec l'extérieur du carter 2 par l'intermédiaire d'orifices 23. Le un fluide de refroidissement est projeté directement à l'intérieur du carter 2 vers le premier porte disques 16 à via au moins un orifice 24. Le fluide est en particulier projeté dans le carter par centrifugation liée à la rotation dudit au moins l'un des éléments d'entrée et de sortie de couple 5 et 6. Avantageusement le porte disque externe 15 de l'embrayage humide comporte un déflecteur 155 pour faciliter la circulation de fluide de refroidissement et le forcer à passer à travers les disques de l'embrayage. Dans une variante non représentée un palier supplémentaire est situé entre le déflecteur 155 et le carter 2.
Dans une variante le carter 2 comporte plusieurs canaux pour amener le un fluide de refroidissement vers l'embrayage 1.
L'invention n'est pas limitée aux exemples illustrés. Dans le cadre de l'invention les disques de frictions peuvent être portés par le porte disque externe et les disques d'embrayage portés par le porte disque interne ou inversement.

## Revendications

1. Module de transmission de couple (100) pour ensemble de transmission de couple (900), ledit module comprenant :
- au moins un embrayage humide (1)
- au moins un dispositif d'actionnement (3) dudit au moins un embrayage humide
- un carter (2) agencé pour loger l'au moins un embrayage humide et le dispositif d'actionnement (3) associé,
ledit module étant configuré pour être pré assemblé pour faciliter le montage dans une chaine de transmission.

2. Module de transmission de couple selon la revendication 1, le carter (2) comportant une première ouverture (29) agencée pour être traversée par un élément de sortie de couple (6) et/ou une seconde ouverture (28) agencée pour être traversée par un élément d'entrée de couple (5) relié à l'au moins un embrayage humide (1), notamment à un second porte disque (15) dudit embrayage humide.

3. Module de transmission de couple selon la revendication précédente, la première ouverture (29) comportant une surface de guidage (29A) agencée pour coopérer avec l'élément de sortie de couple (6) et/ou la seconde ouverture (28) comportant une surface de guidage (28A) agencée pour coopérer avec l'élément d'entrée de couple (5).

4. Module de transmission de couple selon l'une quelconque des revendications précédentes, le dispositif d'actionnement (3) étant sous la forme d'un diaphragme (30) ou d'un piston (35).

5. Module de transmission de couple selon l'une quelconque des revendications précédentes, l'élément d'entrée de couple (5) étant sous forme d'un arbre intermédiaire (50).

6. Module de transmission de couple selon l'une quelconque des revendications précédentes, un premier porte disque (16) étant supporté par l'élément de sortie de couple (6).

7. Module de transmission de couple selon l'une quelconque des revendications précédentes, le au moins un embrayage humide (1) étant logé dans une première partie (26) du carter (2) et/ou le au moins un dispositif d'actionnement (3) étant logé dans une seconde partie (25) du carter (2).

8. Module de transmission de couple selon l'une quelconque des revendications précédentes, le carter (2) comportant au moins un premier canal (21) configuré pour projeter un fluide de refroidissement directement vers le porte disque interne de l'embrayage humide.

9. Module de transmission de couple selon l'une quelconque des revendications précédentes, comportant un unique embrayage humide (1).

10. Ensemble de transmission de couple (900) comportant un module de transmission de couple (100) selon l'une quelconque des revendications précédentes, ledit ensemble comportant en outre au moins un parmi l'organe d'activation (4) du dispositif d'actionnement (3), un amortisseur de torsion (7), une unité hydraulique (600) et un système de pilotage (700).

11. Procédé de montage dans une chaine de transmission d'un ensemble de transmission de couple (900) selon la revendication précédente, le procédé comprenant une étape d'installation du module de transmission de couple (100) dans un logement d'une boîte de vitesse (106).
